# EUROPEAN PATENT APPLICATION

(11) **EP 2 648 432 A1**
(43) Date of publication of application: **09.10.2013**
(21) Application number: 12162849.9
(22) Date of filing: 02.04.2012
(51) Int. Cl.: H04W 4/18, H04L 29/08, G06F 17/30

(54) **An apparatus and a method for content package formation in a network node**

(71) Applicant: Uniqoteq Oy, 20540 Turku (FI)
(72) Inventor: Hakunti, Jussi, 20540 Turku (FI)
(74) Representative: Papula Oy

(57) **Abstract**

The invention relates to a method and apparatus. In the method content presentation comprising content items (231-234) is downloaded to a network node (210) and presenting at least partly on a user interface (211) of the network node. The network node receives an indication of a selection of at least one location on the user interface, the selection being associated with a content package formation function. The network node determining a first content item based on proximity on the user interface to an area delimited by the at least one location, the proximity being within a predefined threshold. The network node determines a number of second content items related to the first content item on the user interface and, finally, transmits information identifying the first content item and the second content items to a server (292) for content package formation.

## Description

### BACKGROUND OF THE INVENTION

### Field of the invention:

The invention relates to mobile communications networks, content consumption in wireless network nodes, content package formation using existing content and an apparatus and a method for content package forming in a network node.

### Description of the Related Art:

The introduction of enhanced bitrates available in 3G and 4G networks have made it meaningful to use television sets, external displays or data projectors as the visual user interface in wireless mobile node, which are a category of network nodes. Content may be retrieved over a radio connection provided by a 3G or a 4G cellular radio access network for presentation on, for example, a television display connected to a wireless mobile node, which may comprise, for example, a mobile phone, a mobile terminal, a cellular phone, a cellular communication device or a computer equipped with a wireless modem. Examples of the 3G and 4G radio access network technologies are the Universal Mobile Communication System (UMTS) and the Long-Term Evolution (LTE) standardized by the 3G Partnership Project (3GPP). A UMTS radio access network provides bitrates up to 14 Mbit/s with the HSDPA feature and up to 42.2 Mbit/s in a dual-cell and up to 84.4 Mbit/s in a dual-cell with Multiple Input-Multiple Output (MIMO) antennas. The dual-cell is supported by the 3GPP release 8 and MIMO by 3GPP release 7. One of the main objectives of the LTE is the providing of downlink data rates of at least 100 Mbps and uplink date rates of at least 50 Mbps. As of 11 May 2011 over two thirds of the 398 commercial Highspeed Packet Access (HSPA) operators support peak downlink bitrate of at least 7.2 Mbit/s. However, in most cases the average bitrates supported continuously for most of the users fall far below the maximum bitrates made available by the standards.

A problem with the present Internet portals and services is that they have not been tailored for use in mobile terminal based browsers. In many cases the Internet portals present graphics, video and animation intensive main pages. Even if the main pages would download quickly enough to be tolerated by the user, the navigation to more specific services or to more specific content categories requires further downloading and further delays. For each of the more specific content categories there may be further portals with graphics, video and animation intensive main pages. Even if the download speed would be sufficient as such to provide tolerable delays, there may appear delays in the service provider side, usually in a fixed Internet, in the answering of the Hypertext Transfer Protocol (HTTP) requests from clients. In some cases where a television is used as a display for a mobile terminal browser, the users might appreciate the possibility of changing quickly from the viewing of television programs to the viewing of Internet content on the television screen and back to the viewing of television programs. The changing might occur, for example, during commercials in between the television programs.

There is also a problem with present user interfaces prepared for the consumption of downloadable content. By consumption is meant, for example, reading of text, viewing of moving picture and watching pictures. Namely, the user interfaces for content consumption are static in structural aspects meaning that the user interfaces are designed with a specific download bitrate or network latency in mind. Usually the user interfaces are designed with a quality of service in mind that is far above the bitrates available for average cellular mobile terminals. Typically, modern browsers, laptop computers and Internet services have been designed with Digital Subscriber Line (DSL) or Wireless Local Area Network (WLAN) quality of service in mind. Sometimes a user may be allowed to choose text only browsing, for example, via Wireless Application Protocol (WAP) gateways, but that is insufficient for most purposes and users. Usually the content processed through a WAP gateway loses most graphical content and text sections may become fragmented.

It would be beneficial to obtain complete content presentations to wireless mobile nodes that would be complete and ready for consumption, by the consumption being meant viewing, reading, watching, navigation through hyperlinks, selection of menu items and game playing, without the need to occasionally wait for a content item to download over a slow network connection. There is a problem in the availability of such complete content presentations. Usually all World Wide Web (WWW) content and all other Internet contents are prepared for consumption in market leader browsers used in desktop and laptop computers that are equipped with DSL or wired LAN level Internet access, in terms of speed.

It would be beneficial to be able to provide a solution that enables ordinary users to easily initiate the preparing of complete content presentations using content available in interactive multimedia presentations or in the conventional WWW or other conventional content consumption means such as Gopher, WAP or multimedia messages.

### SUMMARY OF THE INVENTION:

According to an aspect of the invention, the invention is a method, comprising: downloading a content presentation comprising at least one content item to a network node; presenting at least part of the content presentation on a user interface of the network node; receiving an indication of a selection of at least one location on the user interface, the selection being performed with a content package formation function; determining a first content item based on proximity of the first content item on the user interface to an area delimited by the at least one location, the proximity being within a predefined threshold; determining at least one second content item related to the first content item on the user interface; and transmitting information identifying the first content item and the at least one second content item to a server for content package formation.

According to a further aspect of the invention, the invention is an apparatus comprising at least one processor and at least one memory including computer program code, the at least one memory and the computer program code configured to, with the at least one processor, cause the apparatus at least to perform: downloading a content presentation comprising at least one content item to at least one memory among the at least one memory; presenting at least part of the content presentation on a user interface of the apparatus; receiving an indication of a selection of at least one location on the user interface, the selection being performed with a content package formation function; determining a first content item based on proximity of the first content item on the user interface to an area delimited by the at least one location, the proximity being within a predefined threshold; determining at least one second content item related to the first content item on the user interface by the apparatus; and transmitting, from the apparatus, information identifying the first content item and the at least one second content item to a server for content package formation.

According to a further aspect of the invention, the invention is a wireless mobile node comprising the apparatus.

According to a further aspect of the invention, the invention is an apparatus comprising: means for downloading a content presentation comprising at least one content item to a network node; means for presenting at least part of the content presentation on a user interface of the network node; means for receiving an indication of a selection of at least one location on the user interface, the selection being performed with a content package formation function; means for determining a first content item based on proximity of the first content item on the user interface to an area delimited by the at least one location, the proximity being within a predefined threshold; means for determining at least one second content item related to the first content item on the user interface; and means for transmitting information identifying the first content item and the at least one second content item to a server for content package formation.

According to a further aspect of the invention, the invention is a wireless mobile node comprising the apparatus.

According to a further aspect of the invention, the invention is a computer program comprising code adapted to cause the following when executed on a data-processing system: downloading a content presentation comprising at least one content item to a network node; presenting at least part of the content presentation on a user interface of the network node; receiving an indication of a selection of at least one location on the user interface, the selection being performed with a content package formation function; determining a first content item based on proximity of the first content item on the user interface to an area delimited by the at least one location, the proximity being within a predefined threshold; determining at least one second content item related to the first content item on the user interface; and transmitting information identifying the first content item and the at least one second content item to a server for content package formation.

According to a further aspect of the invention, the invention is a computer program product comprising the computer program.

According to an aspect of the invention, the invention is a method, comprising: downloading a content presentation comprising at least one content item to a network node; presenting at least part of the content presentation on a user interface of the network node; receiving an indication of a selection of at least two locations on the user interface, the selection being performed with a content package formation function, determining a first content item and at least one second content item within an area delimited by the at least two locations; and transmitting information identifying the first content item and the at least one second content item to a server for content package formation. According to a further aspect of the invention, the invention is an apparatus comprising at least one processor and at least one memory including computer program code, the at least one memory and the computer program code configured to, with the at least one processor, cause the apparatus at least to perform the method steps mentioned above. According to a further aspect of the invention the invention is a computer program comprising code adapted to cause the performing of the method steps mentioned above.

According to an aspect of the invention, the invention is a method, comprising: downloading a content presentation comprising at least one content item to a network node; presenting at least part of the content presentation on a user interface of the network node; receiving an indication of a selection of at least one location on the user interface, the selection being performed with a content package formation function of the network node, determining at least one content item based on proximity of the first content item of the presentation of the at least one content on the user interface to the at least one location on the user interface; and transmitting information identifying the at least one content item to a server for content package formation. According to a further aspect of the invention, the invention is an apparatus comprising at least one processor and at least one memory including computer program code, the at least one memory and the computer program code configured to, with the at least one processor, cause the apparatus at least to perform the method steps mentioned above. According to a further aspect of the invention the invention is a computer program comprising code adapted to cause the performing of the method steps mentioned above.

According to a further aspect of the invention, the invention is a method comprising: receiving information identifying a first content item and information identifying at least one second content item at the apparatus; using the information identifying the first content item and the at least one second content item to download the first content item and the at least one second content item to at least one memory among the at least one the memory of the apparatus; selecting at least one content item from among the first content item or the at least one second content item at the apparatus to form a representative content item; transforming the information identifying the first content item and the at least one second content item in the first content item and the at least one second content item to refer to the first content item and the at least one second content item within a content package data structure at the apparatus; and forming, at the apparatus, a content package data structure using the first content item and the at least one second content item, the content package data structure identifying the representative content item; and transmitting the content package data structure to at least one of a delivery server and a wireless mobile node.

According to a further aspect of the invention, the invention is apparatus comprising at least one processor and at least one memory including computer program code, the at least one memory and the computer program code configured to, with the at least one processor, cause the apparatus at least to perform: receiving information identifying a first content item and information identifying at least one second content item at the apparatus; using the information identifying the first content item and the at least one second content item to download the first content item and the at least one second content item to at least one memory among the at least one the memory of the apparatus; selecting at least one content item from among the first content item or the at least one second content item at the apparatus to form a representative content item; transforming the information identifying the first content item and the at least one second content item in the first content item and the at least one second content item to refer to the first content item and the at least one second content item within a content package data structure at the apparatus; and forming, at the apparatus, a content package data structure using the first content item and the at least one second content item, the content package data structure identifying the representative content item; and transmitting the content package data structure to at least one of a delivery server and a wireless mobile node.

According to a further aspect of the invention, the invention is a computer program comprising code adapted to cause the following when executed on a data-processing system: receiving, at an apparatus, information identifying a first content item and information identifying at least one second content item; using the information identifying the first content item and the at least one second content item to download the first content item and the at least one second content item to at least one memory of the apparatus; selecting at least one content item from among the first content item or the at least one second content item at the apparatus to form a representative content item; transforming the information identifying the first content item and the at least one second content item in the first content item and the at least one second content item to refer to the first content item and the at least one second content item within a content package data structure at the apparatus; and forming, at the apparatus, a content package data structure using the first content item and the at least one second content item, the content package data structure identifying the representative content item; and transmitting the content package data structure to at least one of a delivery server and a wireless mobile node.

According to a further aspect of the invention, the invention is a computer program product comprising the computer program.

According to a further aspect of the invention, the invention is a system comprising at least one of the aforementioned apparatuses.

In one embodiment of the invention, at least one of the method steps presented above may be executed or performed in the order in which they are written hereinbefore.

In one embodiment of the invention, the network node is at least one of a mobile node, a wireless mobile node, a terminal device, a mobile terminal, a cellular terminal, a laptop computer, a desktop computer and a server computer.

In one embodiment of the invention, content package formation function is a client for a content package server. The client selects at least one content item or at least one link to at least one content item to be transmitted to the content package server or any server or network node that forms content packages based on the information transmitted to it by the client.

In one embodiment of the invention, the downloading of the content presentation comprising at least one content item comprises receiving, at the network node at least one transmission, the at least one transmission comprising the at least one content item. The at least one transmission may be received from at least one content server, that is, a server storing at least one of the at least one content item.

In one embodiment of the invention, the downloading of a content presentation comprises retrieving from at least one server at least one content item that is associated with the content presentation. By a content item being comprised in a content presentation may be meant that there is a link to the content item in the content presentation to the content item, for example, from another content item comprised in the content presentation. The mentioned another content item may be, for example, a hypertext document, a HTML document, an XHTML document, a content presentation structure file or a controlling content item that may govern the placing and the timing of the presentation of other content items comprised in the content presentation.

In one embodiment of the invention, a content item may comprise at least one of a content presentation structure file, a hypertext document, a structured document, an image file, a photographic file, a video file, a computer graphics animation file, a computer game, a video file comprising metadata, an image file comprising metadata, a metadata document for a multimedia presentation, and a multimedia presentation timing and presentation template file, a Synchronized Multimedia Integration Language (SMIL) file or document or document fragment.

In one embodiment of the invention, the presenting of the at least part of the content presentation on a user interface of the network node may comprises presenting a temporal sequence of a content item in the content presentation, the content item may be a video file, an audio file, an animation, or a computer game. Also a number of content items in the content presentation may be left out of the presentation on the user interface due to the size of the content presentation. Also a number of content items in the content presentation may be left out of the presentation on the user interface due to presentation timing information associated with the content presentation, for example, in a controlling content item. The presentation timing information may define a schedule for presenting the at least one content item or any number of content items in the content presentation, for example, five content items.

In one embodiment of the invention, the receiving of the indication of the selection of the at least one location on the user interface, the selection being associated with the content package formation function may comprise receiving a plurality pointer device location signals to the network node, at least one button down signal for at least one button and at least one button up signal for at least one button. The at least one button may be on the pointer device or on a keypad associated with the pointer device or on a separate keyboard or keypad. The content package formation function may be part of the user interface of the network node. The content package formation function may be an application or an application or plug-in associated with a browser of the user interface. The selection may be performed by the user moving the pointer device to point to a location on the user interface and press one of the aforementioned buttons to indicate that the selection is performed. Alternatively, the user may move the pointer device to point to a location. Then the user may press a button down, move the pointer device to another location thereby indicating a diagonal within a rectangle which is illustrated on the screen and release the button. The user may also select at least two different locations on the user interface in a manner similar to the selection of a single location.

In one embodiment of the invention, the predefined threshold may vary depending on the number of location selections on the user interface. If only a single location is selected the predefined threshold may be set to the size of an average content item set on a browser user interface such as an article on a portal or any WWW page, a video link on a video server. The predefined threshold may also be set by the user either beforehand or during the selection of the at least one location, for example, determining a radius of a circle with the pointer tool or by entering the radius via the keypad or the keyboard. If there is more than one selection of locations so that the selections act as border marks, that is, delimiters for an area, the predefined threshold may be set to a small marginal outside the delimited area. The threshold may also be set to zero or to, for example, less than ten pixels. The threshold may also be set to zero or to, for example, less than 5 millimeters, so that the area delimited may be a single spot or pixel on the user interface.

In one embodiment of the invention, the determining of the first content item based on proximity of the first content item on the user interface to the area delimited by the at least one selected location, comprises determining at least one content item based on proximity of the presentation of the at least one content item on the user interface to the at least one selected location on the user interface.

In one embodiment of the invention, the at least one second content item is related to the first content item on the user interface based on being comprised in a single user interface area or a user interface entity, for example, a structured document element. The comprising in a single user interface area or a user interface entity may also mean that links to the at least one second content item and a link to the first content item is comprised in a single user interface area or a user interface entity, for example, a structured document element, which may be a content item.

In one embodiment of the invention, the at least one second content item is related to the first content item on the user interface based on being downloaded from a set of at least one related source servers, for example, that share a domain name or a part of a domain name.

In one embodiment of the invention, the at least one second content item is related to the first content item on the user interface based on same topic. The same topic may be determined based on an at least partly overlapping set of keywords in the content items.

In one embodiment of the invention, the determining of the at least one second content item related to the first content item on the user interface comprises determining the at least one second content item based on, for example, proximity to the first content item on the user interface. For example, neighboring content items may be selected initially. From the initially selected set of content items there may be used exclusion based on an automatic analysis of the content in the content items or links to them. An automatic analysis based on the links comprises determining whether a predefined number of link elements of the links to the at least one second content item match with link elements in the link to the first content item. The matching link elements need not to have same position within the links being matched. In the automatic analysis based on the links may be used predefined link elements that may be link elements selected from a list or a dictionary of link elements that may be used for effective determination of related contents, other link elements may be ignored. Similarly, frequently occurring elements such as "WWW" or "index" may be ignored in the matching process. Similarly, infrequently occurring elements such as URL query expressions or any numbers or letter sequences not forming meaningful terms may be ignored. By frequently or infrequently occurring may be meant the frequency of occurring in a large number of, for example, WWW pages or other similar corpuses. In the automatic analysis based on the links may be used predefined link elements belonging to a set of predefined link syntax elements. Such link syntax elements may be, for example, domain names. The predefined number may be, for example, one, two, three or five.

In one embodiment of the invention, the step of determining at least one second content item related to the first content item on the user interface, comprises determining at least one controlling content item associated with the first content item or at least one of the at least one second content item. A controlling content item may determine a presentation location on the user interface of at least one content item in the set of content items comprising the first content item and the at least one second content item. A controlling content item may determine a presentation schedule of at least one content item in the set of content items comprising the first content item and the at least one second content item. A controlling content item may be at least one of a structured document, a binary data structure, an object, a data stream, a metadata document and a metadata stream. A controlling content item may also be separable element, a separable field, a separable fragment from at least one of a structured document, a binary data structure, an object, a data stream, a metadata document or a metadata stream, which may be a part of the content presentation. A structured document may be, for example, an HTML page, an XHTML page, a Synchronized Multimedia Integration Language (SMIL) document or an XML document, of which the content item may comprise all or a part of as, for example, an element, a fragment, a field, a set of fields, a set of elements, or a snippet. The separation may be performed using the content package formation tool, that is, a publishing tool.

In one embodiment of the invention, in the transmitting of the information identifying the first content item and the at least one second content item to the server for content package formation the information identifying the first content item and the at least second content item are links, for example, hyperlinks. The links may comprises URLs, URIs or other identifiers capable of identifying directly or indirectly, for example, via a resolution through a resolve entity such as domain name resolver, a given content item on a given server or on a number of servers. The number of servers may form a distributed hash table, wherein the links are used to determine a node storing the content item linked.

In one embodiment of the invention, the information identifying the first content item and the at least second content item are links, for example, hyperlinks. The links may comprise URLs, URIs or other identifiers capable of identifying directly or indirectly, for example, via a resolution through a resolve entity such as domain name resolver, a given content item on a given server or on a number of servers. The number of servers may form a distributed hash table, wherein the links are used to determine a node storing the content item linked.

In one embodiment of the invention, the information identifying a first content item and the information identifying at least one second content item comprise at least one link, for example, at least one hyperlink. The links may comprise URLs, URIs or other identifiers capable of identifying directly or indirectly, for example, via a resolution through a resolve entity such as domain name resolver, a given content item on a given server or on a number of servers. The number of servers may form a distributed hash table, wherein the links are used to determine a node storing the content item linked.

In one embodiment of the invention, the step of transmitting of the information identifying the first content item and the at least one second content item to the server for content package formation comprises transmitting a representative content item to the server. The representative content item may comprise information extracted from the first content item or the at least one second content item. The representative content item may be at least partly edited or reformatted by the user using the user interface of the network node. The representative content item may be an image, a video clip or a text or any combination of these and may comprise a link for activating the presentation of the content package. The representative content item may also be an activation icon for starting the presenting of the content package, for example, in a terminal that has downloaded the content package.

In one embodiment of the invention, the forming of a representative content item using at least one content item may comprise adjusting the size or resolution of the content item when presented on the user interface. The forming may also comprise extracting a text portion from a content item comprising text and association an image or video clip content item with the text to appear in the representative content item. The forming may also comprise adding a structured document, such as a hypertext document, to control the presentation of the at least one content item used in the forming of the representative content item.

In one embodiment of the invention, the network node is a mobile node. In one embodiment of the invention, the mobile node comprises at least one of a handset, a cellular phone, a personal digital assistant, a cellular browser node, a chipset, a mobile device, a wireless mobile node, a wireless content browser node and a mobile terminal.

In one embodiment of the invention, the mobile node or comprises a Long-Term Evolution (LTE) User Equipment.

In one embodiment of the invention, the content presentation further comprises a structured document.

In one embodiment of the invention, the structured document comprises syntax from at least one of a hypertext markup language, extensible hypertext markup language and extensible markup language.

In one embodiment of the invention, the step of determining at least one second content item related to the first content item on the user interface comprises determining an element comprised in the structured document, the element comprising an identifier of the first content item and at least one identifier for the at least one second content item.

In one embodiment of the invention, at least one of the first content item and the second content item comprise a video component and a video metadata component. The video metadata component related with the video component on the user interface via at least one of a link between the video component and the video metadata component or by video the metadata component being comprised in the video component.

In one embodiment of the invention, the step of determining at least one second content item related to the first content item on the user interface comprises selecting a set of candidate content items based on a proximity on the user interface to the first content item, the proximity having a predefined threshold value, and determining from the set of candidate content items such candidate content items that together are comprised in a rectangular area on the user interface.

In one embodiment of the invention, the step of determining at least one second content item related to the first content item on the user interface comprises comparing at least one element of an identifier of the first content item to at least element of an identifier for a second content item; and in response to at least one matching element in the comparison, determining the second content item as related to the first content item and adding the second content item among the at least one second content item.

In one embodiment of the invention, the at least one element comprises at least one of a domain name, a port number, an internet protocol address, a name component, a path name, a parameter and a query expression.

In one embodiment of the invention, the step of determining at least one second content item related to the first content item on the user interface comprises forming a first vector wherein the vector elements represent numbers of occurrences of predefined search terms in the first content item, forming a second vector wherein the vector elements represent numbers of occurrences of predefined search terms in the second content item, and in response to the first vector having a distance below a predefined threshold to the second vector, determining the second content item as related to the first content item.

In one embodiment of the invention, the first content item comprises at least one of a text, a hypertext, a picture, a computer graphics animation, a computer game and a video.

In one embodiment of the invention, the first content item comprises at least one of a text, a hypertext, a picture, a computer graphics animation and a video.

In one embodiment of the invention, the information identifying the first content item and the at least one second content item comprises at least one of a uniform resource locator and a uniform resource identifier.

In one embodiment of the invention, the method further comprises receiving information identifying a first content item and information identifying at least one second content item at a server, using the information identifying the first content item and the at least one second content item to download the first content item and the at least one second content item to the server, selecting a representative image or content item from among the first content item or the at least one second content item or forming a representative content item using the first content item or the at least one second content item, transforming the information identifying the first content item and the at least one second content item in the first content item and the at least one second content item to refer to the first content item and the at least one second content item within a content package data structure, and forming a content package data structure using the first content item and the at least one second content item, the content package data structure identifying the representative image or content item.

In one embodiment of the invention, the method further comprises compressing the content package data structure of forming a container file of the content package. The container file may also be compressed. The container file may be, for example, a Tape Archive (TAR) file, that is, a so called TAR ball.

In one embodiment of the invention, the method further comprises transmitting the content package data structure to a mobile node or to a content package delivery server.

In one embodiment of the invention, the network node comprises a wireless mobile node and wherein the user interface is presented on an external display communicatively connected to the wireless mobile node.

In one embodiment of the invention, the at least one processor of the apparatus, for example, of a wireless mobile node may be configured to perform any of the method steps disclosed hereinabove.

In one embodiment of the invention, the at least one processor of the apparatus, for example, of a content package server or any server may be configured to perform any of the method steps disclosed hereinabove. The server may be a content package server or an origin server.

In one embodiment of the invention, the transmission and reception steps may be performed by at least one radio frequency circuit.

In one embodiment of the invention, the mobile node such as a User Equipment (UE) comprises a mobile station or generally a mobile terminal. In one embodiment of the invention a user of a mobile terminal is identified using a subscriber module, for example, User Services Identity Module (USIM) or a Subscriber Identity Module (SIM). The combination of Mobile Equipment (ME) and a subscriber module may be referred to as a mobile subscriber. A mobile subscriber may be identified using an IMSI. An IP address may be allocated or associated with a mobile subscriber.

In one embodiment of the invention, the apparatus is a mobile terminal, for example a, mobile handset.

In one embodiment of the invention, the apparatus is a semiconductor circuit, a chip or a chipset.

In one embodiment of the invention, the base station node is configured to be used in a 4G system such as, for example, LTE Evolved Packet System (EPS).

In one embodiment of the invention, the computer program or the computer program product is stored on a computer readable medium. The computer readable medium may be, but is not limited to, a removable memory card, a removable memory module, a magnetic disk, an optical disk, a holographic memory or a magnetic tape. A removable memory module may be, for example, a USB memory stick, a PCMCIA card or a smart memory card.

In one embodiment of the invention, at least one of the method steps presented above in association with embodiments comprising multiple steps or phases may be executed or performed in the order in which they are written hereinbefore within the respective embodiment.

The embodiments of the invention described hereinbefore may be used in any combination with each other. Several of the embodiments may be combined together to form a further embodiment of the invention. A method, a base station, an apparatus, a computer program or a computer program product to which the invention is related may comprise at least one of the embodiments of the invention described hereinbefore.

It is to be understood that any of the above embodiments or modifications can be applied singly or in combination to the respective aspects to which they refer, unless they are explicitly stated as excluding alternatives.

The benefits of the invention are related to improved usability of a network node for the formation of content packages. The formation of content packages is made easier for the user and the process may be made quicker involving shorter use of the network node. Also the availability of content packages may be made wider.

### BRIEF DESCRIPTION OF THE DRAWINGS:

The accompanying drawings, which are included to provide a further understanding of the invention and constitute a part of this specification, illustrate embodiments of the invention and together with the description help to explain the principles of the invention. In the drawings:
**Fig. 1** illustrates a television browser system comprising a wireless network node and a content package server within a mobile communication system, and an Internet Protocol (IP) network comprising a plurality of content source servers, in one embodiment of the invention;
**Fig. 2** illustrates the use of a television browser system to form a content catalog comprising a plurality of content packages using information obtained from a plurality of content servers in one embodiment of the invention;
**Fig. 3** is a message sequence chart illustrating the forming of a content package using two content servers and the providing of the content package to a wireless mobile node in one embodiment of the invention;
**Fig. 4** illustrates the use of a content selection user interface tool in the forming of a content package in one embodiment of the invention;
**Fig. 5** is a flow chart illustrating a method for content package formation using a network node in one embodiment of the invention; and
**Fig. 6** illustrates an apparatus in one embodiment of the invention.

### DETAILED DESCRIPTION OF THE EMBODIMENTS:

Reference will now be made in detail to the embodiments of the present invention, examples of which are illustrated in the accompanying drawings.

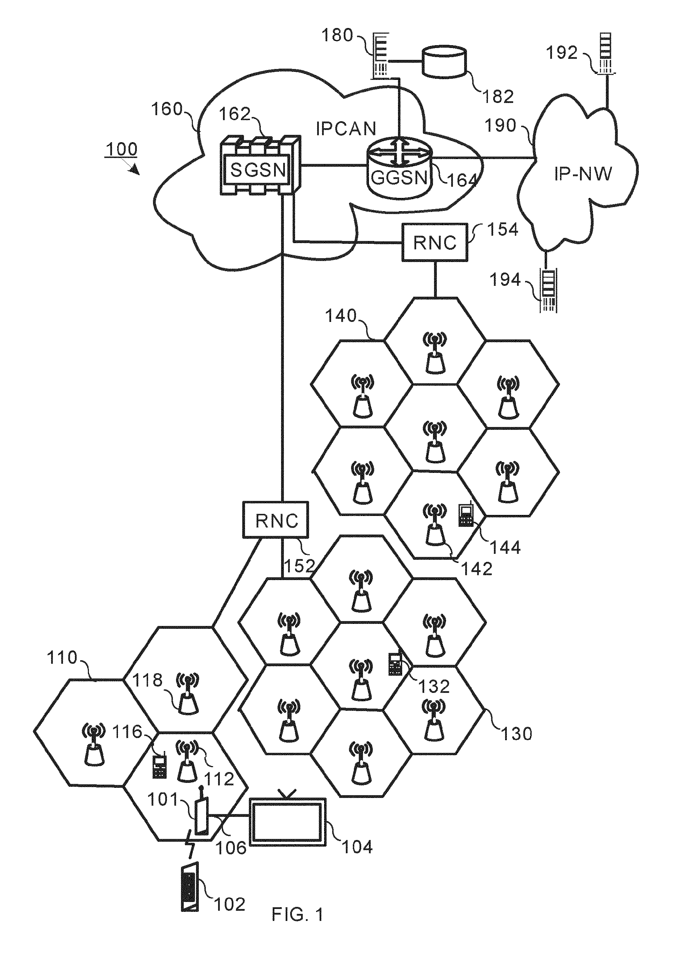

Figure 1 illustrates a television browser system comprising a wireless network node and a content package server within a mobile communication system, and an Internet Protocol (IP) network comprising a plurality of content source servers, in one embodiment of the invention.

In Figure 1 there is illustrated a mobile communication system 100 comprising an operator core network 160. Communicatively connected to the operator network 160 there is also an IP network 190, which may comprise the Internet.

In Figure 1 there are illustrated Radio Access Network (RAN) areas 110, 130 and 140. The RAN areas may represent different geographical areas with very different quality of service in terms of the bitrate provided. This may be due to the fact that different RAN areas may also serve areas with different economic statuses and population densities. In RAN area 110 there is illustrated a base station 112 and a base station 118. Within the cell footprint of base station 112 there is a mobile node 116, which may also be an ordinary cellular phone. Within the cell footprint of base station 112 there is also a wireless mobile node 101. In RAN area 130 there is illustrated a mobile node 132. In RAN area 140 there is illustrated a base station 142 and a mobile node 144 within the cell footprint provided by base station 142. RAN area 110 is connected to a Radio Network Controller (RNC) 152. RAN area 130 is also connected to a Radio Network Controller (RNC) 152, whereas RAN area 140 is connected to a Radio Network Controller (RNC) 154. RNC 152 and 154 are communicatively connected to operator core network 160, which in this case acts as an IP Connectivity Access Network (IP CAN).

In Figure 1 there is also illustrated wireless mobile node 101, which may also be called a television browser node. Wireless mobile node 101 is connected via a connection 106 to an external display 104, for example, a conventional digital or analog television. The television may be, for example, a plasma television, an LCD television or a projector projecting an image on a screen or vapor. The connection 106 may comprise at least one of a wired and a wireless connection and may comprise, for example, at least one of a Universal Serial Bus (USB) interface, a High Definition Multimedia Interface (HDMI), and an analog television antenna connector and a SCART Interface (Syndicat des Constructeurs d'Appareils Radior6- cepteurs et Téléviseurs). Wireless mobile node 101 is controlled using a remote control unit 102. Wireless mobile node 101 may be also referred to as a cellular phone, a cellular terminal, a cellular modem, a mobile terminal, a mobile phone, a personal digital assistant, a handset or a browser node. Remote control unit 102 may comprise a keypad for controlling television 104 directly and the remote control unit 102 may comprise a keypad for controlling wireless mobile node 101. The keypad for controlling wireless mobile node 101 may be a separate keypad. The separate keypad may be placed underneath remote control unit 102. The keypads for television 104 and wireless mobile node 101 may be placed on opposite sides or one of these keypads may be hidden behind a sliding cover or any cover. The communication between wireless mobile node 101 and remote control unit 102 occurs, for example, over at least one of an Infrared (IR) connection, a Radio Frequency (RF) connection or a microwave frequency connection. Wireless mobile node 101 is configured to communicate with base station 112 in RAN area 110. Base station 112 is communicatively connected to RNC 152, which is further communicatively connected to IP Connectivity Access Network (IP CAN) 160. Base station 112 is, for example, a UMTS Node B. RAN area 110 is communicatively connected to IP CAN 160, which comprises a Serving GPRS Support Node (SGSN) 162 and a Gateway GPRS Support Node (GGSN) 164. GGSN 164 provides an IP address for wireless mobile node 101 and provides connectivity to a content server 180 and to an IP network 190 which may be, for example, the Internet or an Intranet or any packet switched network. To IP network 190 is communicatively connected a content server 192 and a content server 194, which may be operated, for example, by a separate content provider organizations.

Content server 180 comprises a database 182, which may comprise information on at least one of content providers and content consumers. Database 182 stores a plurality of content packages. Database 182 may also store at least one content catalog, which may further comprise at least two content catalog items, wherein a content catalog item further comprises at least one identifier for a content package. The identifier for a content package may be, for example, a URL, a URI, an object identifier or any logical name. A content catalog item may also comprise a representative image or content item for the content package and optionally other representative information which are presented in a placeholder within a user interface of wireless network node 101. By placeholder may be meant a predefined area on the user interface. The placeholder may be defined in a user interface template obtained to wireless network node 101. A placeholder is selected for the content catalog item based on, for example, whether the placeholder is large enough to fit the representative image or content item and the optional representative text for the content package. A content catalog item may also comprise information that assists in selecting a suitable placeholder in the user interface template for the representative image and the optional representative text of the content package. The information that assist in selecting a suitable placeholder may comprise at least one of: an identifier of a placeholder, coordinates of a placeholder, a size of a placeholder, the dimensions of a placeholder, location of a placeholder on the user interface template, and a location category of a placeholder on the user interface template such as, for example, whether the placeholder is a banner or a part of a table.

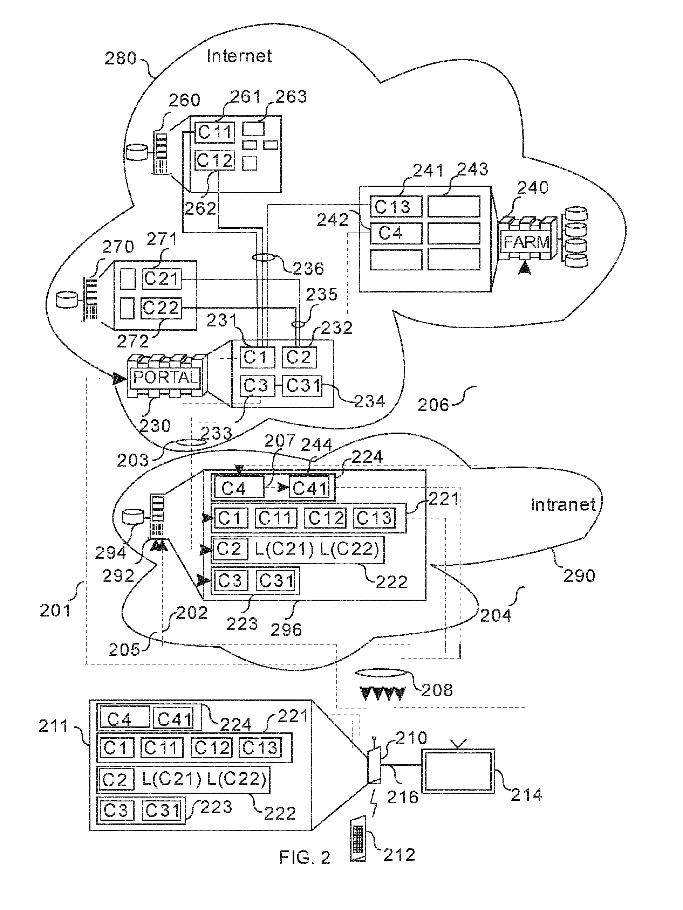

Figure 2 illustrates the use of a television browser system to form a content catalog comprising a plurality of content packages using information obtained from a plurality of content servers in one embodiment of the invention.

In Figure 2 there is also illustrated wireless mobile node 210, which may also be called a television browser node. The wireless mobile node may be replaced by any mobile node or any network node, also a fixed network node, for the purpose of the invention. The fixed network node may be connected to a network node providing Internet access, for example, using a Local Area Network, a Metropolitan Area Network, a fiber optics cable, a cable television connection or a WLAN. Wireless mobile node 210 is connected via a connection 216 to an external display 214, for example, a digital television, an analog television, a computer monitor or a projector. Wireless mobile node 210 may be also referred to as a cellular phone, a cellular terminal, a cellular modem, a mobile terminal, a mobile phone, a personal digital assistant, a handset or a browser node. Wireless mobile node 210 may comprise at least one of the features of wireless mobile node 101 described in association with Figure 1. Similarly, external display 214 may comprise at least one of the features of the external display 104 described in association with Figure 1. In Figure 2 there is illustrated a content package server 292 within an Intranet 290 or other IP network. The content package server 292 comprises a memory 294, which may comprise a storage system 296 for at least one content package. Storage system 296 may be a database, a file system or other file organization system. Storage system 296 is illustrated in Figure 2 with a box. Information in storage system 296 may be used to form a content catalog (not shown). In Figure 2 there is also illustrated an IP network 280, which may be the Internet or a plurality of connected networks. IP network 280 comprises a content server 260, a content server 270 and a content server farm 240, which may comprise, for example, at least one blade server and an array of non-volatile memories such as disks. IP network 280 also comprises a portal server 230. The portal server may refer to content items stored in other content servers.

In Figure 2 portal server 230 stores content items 231 - 234. The content items may comprise at least one of a hypertext pages, a HTML page or an XHTML page, a structured document or a metadata document for a multimedia presentation. Content server 270 stores content items 271 and 272. Content server 260 stores content items 261, 262 and 263. Content server farm 240 stores content items 241, 242 and 243. Content item 231 comprises links to content items 261, 262 and 241 as illustrated with line group 236. Content item 232 comprises links to content items 271 and 271 as illustrated with line group 235. Content item 233 comprises a link to content item 234 within portal server 230. Content items 231 - 234, 241 - 243, 261 - 263 and 271 - 272 may comprise at least one of a hypertext document, a structured document, an image file, a photographic file, a video file, a computer graphics animation file, a computer game, a video file comprising metadata, an image file comprising metadata, a metadata document for a multimedia presentation, and a multimedia presentation timing and presentation template file.

The starting point in Figure 2 is that wireless mobile node 210 retrieves from portal server 230 content items 231 - 234 and possible other content items (not shown), as illustrated with arrow 201. The retrieval may be performed in response to a request from the user of wireless mobile node 210 via the user interface to first retrieve (not shown) a content item such as an HTML or an XHTML page comprising content items 231 - 234. Content items 231 - 234, in addition to possible other content items (not shown), are presented using the user interface on display 214 or another display associated with wireless mobile node 210. Thereupon, the user of wireless mobile node 210 uses a content package formation function or tool (not shown) in association with the user interface to select content items 231 - 234 either one-by-one or simultaneously as an interrelated content set comprising content items 231 - 234. In this case it is assumed that the user selects content items 231 - 234 individually one by one. When the user decides to start content package formation, for example, by selecting a function at the user interface to initiate the forming of individual content packages related to each of the content items 231 - 234, the selection of content items 231 - 234 for the forming of separate content packages associated with each of them is indicated to content package server 292 by wireless mobile node 210, as illustrated with arrow 202. The indication may comprise information which, if any, of the content items linked to in the content items 231 - 234 should also be added to the content packages to be formed starting from content items 231 - 234. In one embodiment of the invention, content items 231 - 234 are hypertext fragments which may comprise at least one directly associated image. A hypertext fragment and the at least one directly associated image, are herein described as atomic, that is, complete single content items. The content package formation function may comprise computer program code associated with computer program code for displaying and controlling the user interface. After having received, from wireless mobile node 210, the indication of selection of content items 231 - 234 for the forming of separate content packages to content package server 292, content package server 290 initiates the composing of content packages corresponding to content items 231 - 234. Content package server 292 retrieves content item 231 from portal server 230. Content package server 292 also retrieves content items 261 and 262 from content server 260 based on links in content item 231 pointing to content items 261 and 262. Content package server 292 also retrieves content item 241 from content server farm 240 based on a link in content item 231 pointing to content item 242. Content package server 292 retrieves content item 232 from portal server 230. Content package server 292 retrieves content item 233 from portal server 230 and retrieves content item 234 also from portal server 230 wherein it is stored. The retrieval is based on a link in content item 233 that points to content item 234 in portal server 230. Thereupon, the user of wireless mobile node 210 moves to content item 242, for example, by entering or selecting a link such as a URL to content item 242 via the user interface. This involves that wireless mobile node 210 either downloads content item 242 completely from content server farm 240 or starts streaming it as a content stream from content server farm 240, as illustrated with arrow 204. Thereupon, the user selects content item 242 using the content package formation function of the user interface and initiates the forming of a content package using the user interface. Information identifying content item 242 is communicated to content package server 292 from wireless mobile node 210, as illustrated with arrow 205. In response, content package server 292 retrieves content item 242 from content server farm 240 as illustrated with arrow 206. The retrieval may be for the entire content item 242.

Upon having received all content required for the composing of content packages associated with content items 231 - 234 and content item 242, content package server 292 starts forming the content packages. In one embodiment of the invention, the forming of the content package may involve the selection of a representative content item such as an image or a video file that is displayed in a placeholder, the selection of which may be used to open the content package in the user interface. The content package may be presented in an area in the user interface that is larger than the placeholder. The area may be the entire user interface or the entire user interface excluding at least one area for a number of control icons or user interface tool symbols. A content package comprising only small content items may be presented in the area of the placeholder. The representative content item may have been indicated by the user to the content package server 292 in association with the indication of a content item for content package formation. The representative content item may be indicated separately from the content item, the links of which are used to collect the content package via downloading to content package server 292.

In one embodiment of the invention, the representative content item may be selected by the user separately from the selection of the content item for content package formation using the user interface. The user may also prepare the representative content item using a content authoring tool comprising at least one of a photograph handling tool, a hypertext document writing tool or a video manipulation tool. At least one of these authoring tools may be comprised in the user interface of wireless mobile node 210. The user may simply enter text and select to add her image or an avatar image or any preselected or selectable image in order to produce the representative content item. To the representative content item may also be added automatically by the content package formation function an identifier or user name of the user at the moment logged in to the wireless mobile node 210 or whose profile is at the moment active in the user interface. The user name may be at least one of an E-mail address, a Session Initiation Protocol (SIP) SIP-URI, a Telephone TEL-URI and an alias name registered by the user beforehand. The text entered may be a recommendation for a content presentation or, for example, a movie. The user authored representative content item may be uploaded to content package server 292 in association with a content package formation request or such as messages 201 and 205.

There may be links to other content items from the content item used for content package formation. The content item for content package formation may also be referred to as a root content item or an initial content item. The representative content item may also be selected by content package server 292 based on information comprised in a content item downloaded by content package server 292 that is to be comprised in the content package to be formed. Such a downloaded content item may be one of the content items linked to directly or indirectly from the root content item. The selection of the representative content item in content package server 292 may use data comprised in a content item among the content package content items. The data may be metadata or text. An example of such metadata may be metadata associated with an image or a video or other multimedia presentation. The metadata may comprise a structured document, a structured document fragment or a structured data stream that may have information that times it with a video. An example of such metadata may be the Motion Picture Experts Group (MPEG) MPEG-7 metadata. There may be a specific element, tag or parameter within the metadata that specifies a specific frame within the video. The representative content item may also be a video clip extracted from a video content item. The representative content item, for example, an image or video clip may also be selected from the start of the video. An image or a video clip as a representative content item may also be selected using image recognition by finding a particular visual pattern within the video.

Content package server 292 forms a content package by adding the content items to be comprised in the content package. The content items to be comprised in the content package comprise the root content item and optionally at least one content item that has been linked to in the root content item and optionally at least one content item comprised in a transitive closure of links and content items formed by starting from at least one link in the root content item. From the at least one content item comprised in the transitive closure of links and content items may be filtered content items not associated with the root content item, for example, in terms of theme, content, author or content rights owner. The filtering may use the comparing of at least one element in a first link comprised in the root content item to at least element in a second link within the transitive closure. If the comparison indicates at least one link element that does not match, the content item referred to using the second link is excluded from the content package. In one embodiment of the invention, the at least one element comprises at least one of a domain name, a port number, an internet protocol address, a name component, a path name, a parameter and a query expression. The filtering of the transitive closure may be performed before the downloading of content items to content package server 292. To the content package may be added the representative content item and the content items retrieved for the content package. To the content package may also be added structure information indicating the representative content item and the content items comprised in the content package. The structure information may be a structured document or a file directory. A link may be formed from the representative content item to a first content item by the selection of which a second content item is presented on the user interface. The second content item may be the root content item. Content package server 292 may transform links referring to target content items in any source content item so that the links refer to the target content items within the content package instead of their original locations in, for example, IP network 280 and the content servers therein. In particular, from the links may be removed information about the servers such as domain names. Directory elements in the links may be translated to refer to directory elements within the content package so that the correct content items are referred to. In one embodiment of the invention, a link between two content items comprise at least one a hyperlink, a URL, a URI and an object identifier.

Using content item 242 content package server 292 builds content package 224 comprising content item 242 and content item 244. Content item is formed as a representative content item for content package 224 to be presented in a placeholder associated with content package 224. Content item 244 may be formed using metadata associated with content item 242, which may be, for example, a video file. The metadata indicates, for example, the location or time of a frame such as an MPEG Intra frame to be used as representative content item 244. The formation of content item 244 using content item 242 is illustrated with arrow 207. The metadata may also indicate a trailer or any other video clip comprised within content item 242 to be used as representative content item 244. The metadata may also indicate a link to a separate content item that must be downloaded separately from content item 242 from, for example, content server farm 240. Using content items 231, 261, 262 and 241 content package server 292 builds a content package 221. Using content item 232 content package server 292 builds a content package 222. However, due to information comprised in links from content item 232 to content items 271 and 272 or copyright information determined from content items 271 and 272, content items 271 and 272 are not downloaded by content package server 292 to be included in content package 222 as direct copies. The copyright information may be determined based on at least one of an analysis of at least one element in the links to content items 271 and 272, an analysis of metadata associated with content items 271 and 272, and an analysis of textual data associated with content items 271 and 272. The analysis of the at least one element in the links may comprise determining whether the at least one element is comprised in a list of allowed or denied elements. The at least one element may comprise at least one of a domain name, a part of a domain name, a path name, and any URL element. To content package 222 is merely added content item 232 comprising links to content items 271 and 272 in their original locations. In this way, republication of copyrighted content outside their original sources may be avoided. Using content items 233, 234, content package server 292 builds a content package 221. If a content package lacks, for copyright or other reasons, a root content item, a representative content item may have a link attached thereto by content package server 292 that refer directly to at least one content item in its original location on a content server within IP network 280. Content packages 221 - 224 may be compressed by content package server 292.

Thereupon, content packages 221 - 224 are downloaded to wireless mobile node 210, as illustrated with arrow cluster 208. The content packages 221 - 224 are stored in a memory 211 of wireless mobile node 210. The content packages may be ready for viewing without involving any downloading over a wireless access connection connecting wireless mobile node 210 to IP network 280, except in the cases where copies may not be produced of content items to content packages due to copyright reasons or other factors.

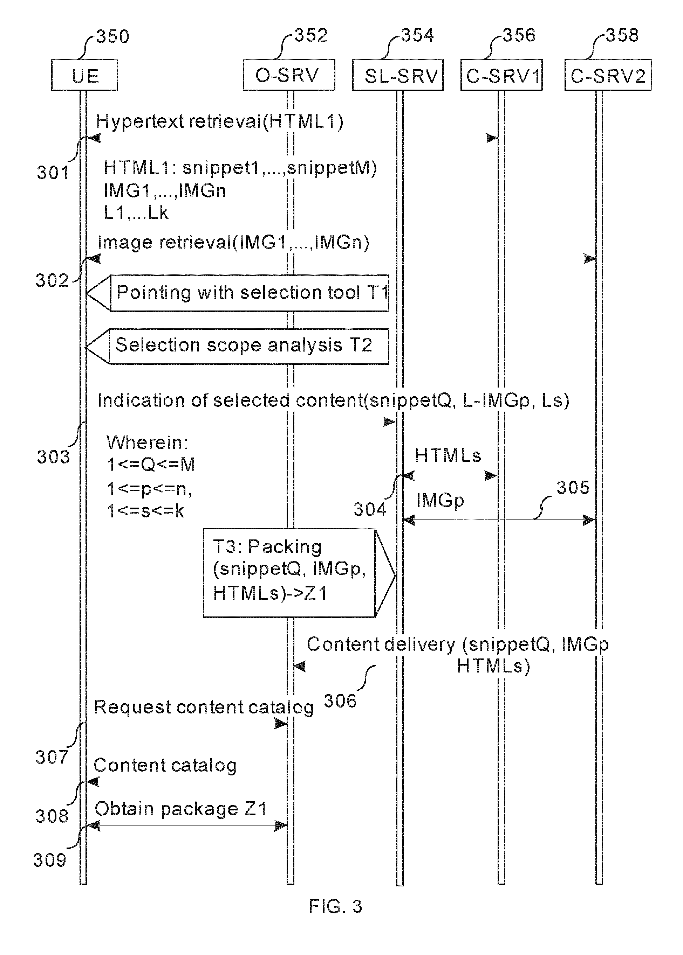

Figure 3 is a message sequence chart illustrating the forming of a content package using two content servers and the providing of the content package to a wireless mobile node in one embodiment of the invention.

In Figure 3 there is illustrated a User Equipment (UE) 350, which may be the wireless mobile node of Figure 1 or Figure 2. UE 350 may also be any network node, for example, a fixed network node. There is also illustrated a selection server (SL-SRV) 354, which may comprise functions from content package server 292 illustrated in Figure 2. These functions may be related to content package formation. There is also illustrated an origin server (O-SRV) 352, which may comprise the content package delivery functions of content package server 292 illustrated in Figure 2. In one embodiment of the invention SL-SRV 354 and O-SRV 352 may be comprised in a single network node. The SL-SRV 354 and O-SRV 352 may be separate software components, entities, applications, processes or threads executed in the single network node. There are also illustrated content servers (C-SRV) 356 and 358.

The starting point in Figure 3 is that a user of UE 350 requests, from content server 356, via a user interface of UE 350 the retrieval of a hypertext document, which may also be referred to as a content item, which comprises a hypertext source file (HTMLl), as illustrated with arrow 201. Hypertext document HTML1 comprises as parts hypertext fragments referred to as snippet1,**...,** snippetM, wherein M represents an arbitrary natural number. Hypertext document HTML1 also comprises hyperlinks, that is, links L1,...,Lk, wherein k represents an arbitrary natural number. It is assumed that at least part of links L1,...,Lk refer to image files IMG1,...,IMGn, wherein n represents an arbitrary natural number. The user interface initiates the downloading of linked image files IMG1,...,IMGn from content server 358 to UE 350, as illustrated with arrow 202. Thereupon, the hypertext document is presented on the user interface, for example, as complete a World Wide Web (WWW) page with all the images and snippets.

At time T1, the user selects a content package formation function or tool (not shown) in the user interface. With the tool the user selects one of the snippets, let us say snippetQ, which is one of the downloaded snippets presented on the user interface. The content package formation function or tool may also be referred to as a publication tool.

At time T2, the scope of the user selection is determined either automatically by UE 350 publication tool or with the aid of the user, for example, by selecting an area around the selected snippetQ, for example, by enlarging an area around snippetQ. The area may also be selected directly by the publication tool without first selecting a narrow point, for example, by selecting a rectangular area or an area of other geometrical shape. The scope of the selection may comprise at least one content item in addition to snippetQ. The automatic selection by the publication tool may utilize the structure of hypertext document HTML1 based on structure elements such as HTML elements or XML elements. Hypertext document elements may be referred to as the snippets. The publication tool may automatically determine that image IMGp and link Ls are comprised in snippetQ, for example, by determining that they are enclosed between structural elements between which snippetQ is comprised. Irrespective of the selection method by the publishing tool, it is assumed herein that snippetQ, IMGp and link Ls become selected. In one embodiment of the invention, the user may select them individually or together by virtue of them being comprised in a rectangle selected with the publishing tool. The user may also manually select content items away from the area selected by the publishing tool or add individual links or images to the selected set of content items to be included in the content package to be formed. Thereupon, the user of UE 350 decides to indicate snippetQ, IMGp and Ls to selection server 354, in order to produce a content package comprising them. The user may also select or author a representative content item to appear on the user interface to represent the content package when a selection of downloaded content packages is presented to the user. UE 350 transmits an indication comprising snippetQ, link to IMGp i.e. L-IMGp and link Ls to HTMLs to selection server 354, as illustrated with arrow 203. In response to the indication, selection server 354 downloads a hypertext document HTMLs from content server 356 using link Ls, as illustrated with arrow 204. Further, selection server 354 downloads IMGp using link L-IMGp from content server 358, as illustrated with arrow 205. The snippet snippetQ may be uploaded to selection server 354 completely to avoid problems in indicating the selection from hypertext document HTML1, if hypertext document HTML1 is updated constantly. It may be difficult to determine which delimiting structure elements UE 350 actually meant in the indication to selection server 354. Thereupon, selection server 354 may format snippetQ to a complete hypertext document that is directly decodable and presentable on the user interface of UE 350. Thereupon, selection server modifies the hyperlinks in the complete hypertext document to refer to HTMLs and IMGp within the content package locally, for example, in relation to a root of the content package file structure. Thereupon, HTMLs and IMGp are added to the content package, for example, as separate files. There may also be subdirectories for images and hypertext documents. The content package may be compressed entirely or just the hypertext documents at time T3. Selection server 354 may also determine the file format of IMGp or other image or video file formats to decide whether the entire content package may be compressed or whether individual image or video files may be compressed. In Figure 3 it is assumed that content package comprising snippetQ, IMGp and HTMLs is compressed or used to form a container file such as a Tape Archive (TAR) file. Note that snippetQ may have been transformed with regard to hyperlinks in it so that they refer to IMGp and HTMLs within the content package, and transformed so that it becomes presentable on the user interface of UE 350 without being embedded in HTML1 hypertext file. The content package is referred to as Z1 in Figure 3. Content package is transmitted from selection server 354 to origin server 352, as illustrated with arrow 206. In the selection server 354 and origin server 352 are a functions in a single node, the transmission may occur using, for example, process-to-process communication such as a pipe, a windowed exchange of memory buffers, a socket, a handing of a pointer to a memory block comprising the content package. The memory block may have been allocated by selection server 354 program code.

In one embodiment of the invention UE 350 may request a content catalog from origin server 352, as illustrated with arrow 207, and obtain it in response from origin server 352, as illustrated with arrow 208.

Due to being included in the content catalog or otherwise, UE 350 downloads content package Z1 from origin server 354 as illustrated with arrow 209.

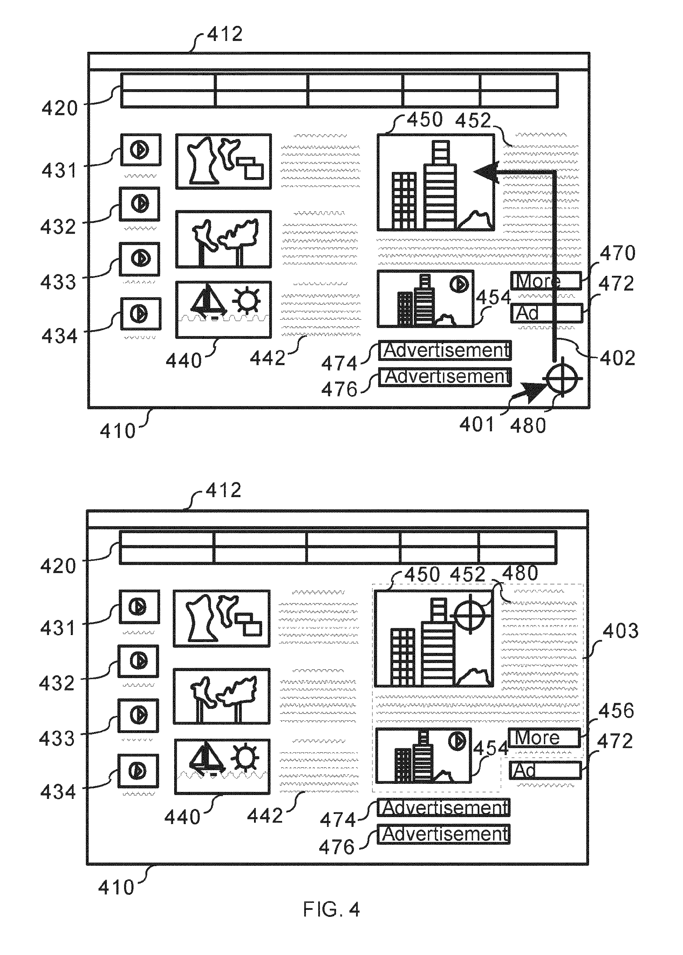

Figure 4 illustrates the use of a content selection user interface tool in the forming of a content package in one embodiment of the invention.

In Figure 4 there is illustrated a hypertext page 410, for example, an HTML page or an XHTML page, for example, on a user interface of a wireless mobile node of Figures 1 and 2 or UE 350 of Figure 3 or any network node. The user interface may comprise a separate browser, the screen of which page 410 illustrates. The page 410 comprises a header banner 420, for example, with links to different content categories. Above the header banner 420 there is illustrated a space 412 for a number of buttons or tool selectors related to the control of the user interface, which may be a browser user interface. Boxes 431 - 434 represent links to videos. Below the boxes are illustrated texts that may be the titles of the videos. Box 440 comprising an image of a sailing boat represents an image, which has an accompanying text article or fragment, which may be a snippet that may comprise a link to a full article on the subject of the snippet and box 440. Box 450 illustrating a city has an accompanying text article 452, which may also be a snippet. Associated with article 452 and box 450 there is also a video link 454. Associated with article 452 there is also a link 470 to more information on the subject. There are illustrated also thumbnail images for advertisements 472, 474 and 476. In Figure 4 there is illustrated a publishing tool pointer 480, that is, a content package formation tool or function pointer, that is a part of the user interface of the publishing tool on the user interface of UE 350. The publishing tool may be part of a computer program code of the program code for the user interface of UE 350.

The starting point in Figure 4 is that user selects publishing tool 480, for example, with a normal user interface pointer tool such as a mouse pointer, as illustrated with arrow 401. Thereupon user moves the tool pointer over box 450, as illustrated with arrow 402. Thereupon, the user selects the location on image 450 with the tool pointer, for example, by pressing a button or by any other user interface command. The publishing tool takes image 450 as a starting point for content package formation. The publishing tool selects, for example, based on an analysis of the source code for hypertext page 410, or any controlling content item that determines the structure of page 410, that text 452 is related to image 450. The analysis may be based on the fact that image 450 and 452 are parts of a single structural component, a structural element or a fragment of the hypertext page or any controlling content item, for example, so that they are listed between a start and end delimiter element. The start delimiter element and the end delimiter elements may be XML start and end tags or other similar tags or parameters in another structured document or document fragment format. In Figure 4 it may be assumed that initially publishing tool selects image 450 and text 452. However, the user may continue the selection of content items for the same content package by pointing to other content items on hypertext page 410 such as video link 454 and banner 470 using the tool pointer, for example, by moving or dragging the tool pointer over them and selecting them by the press of a button or by any other user interface command. The final area to be used for the forming of a content package is illustrated with the area delimited with lines 430.

In one embodiment of the user may select a different mode of the tool pointer and remove content items automatically selected by the publishing tool from a further content package formation process maybe involving the submitting of information identifying the content items to a content package server or other network node that form the content package.

In one embodiment of the invention, the user may select a number of locations on the user interface 410, for example, to define perimeter or border points to delimit an area of the content items, of which the user wants to form a content package.

In one embodiment of the invention, the user may select a location on the user interface and drag the pointer tool to another location on the user interface to define two corners of a rectangle, the first of which is the selected location.

In one embodiment of the invention, the publishing tool determines a first content item based on proximity of the first content item on the user interface to an area defined by the at least one location, the proximity being within a predefined threshold.

In one embodiment of the invention, the threshold may be set to zero, if only the content item directly pointed to is to be selected with one selected location.

In one embodiment of the invention, of the user may select a different mode of the tool pointer and remove content items selected by the user earlier using the tool pointer 480, in any of the aforementioned ways, from a further content package formation process and the submitting of information identifying the content items to a content package server or other network node that forms the content package.

In one embodiment of the invention, the user may add using the tool pointer 480 additional content items not selected by the user earlier using the tool pointer 480 or not selected automatically by the publishing tool, in any of the aforementioned ways, for a further content package formation process and the submitting of information identifying the content items to a content package server or other network node that forms the content package.

In one embodiment of the invention, after the user is satisfied with the selected content items, the user may choose to submit the information identifying the selected content items to a content package server or other network node that forms the content package.

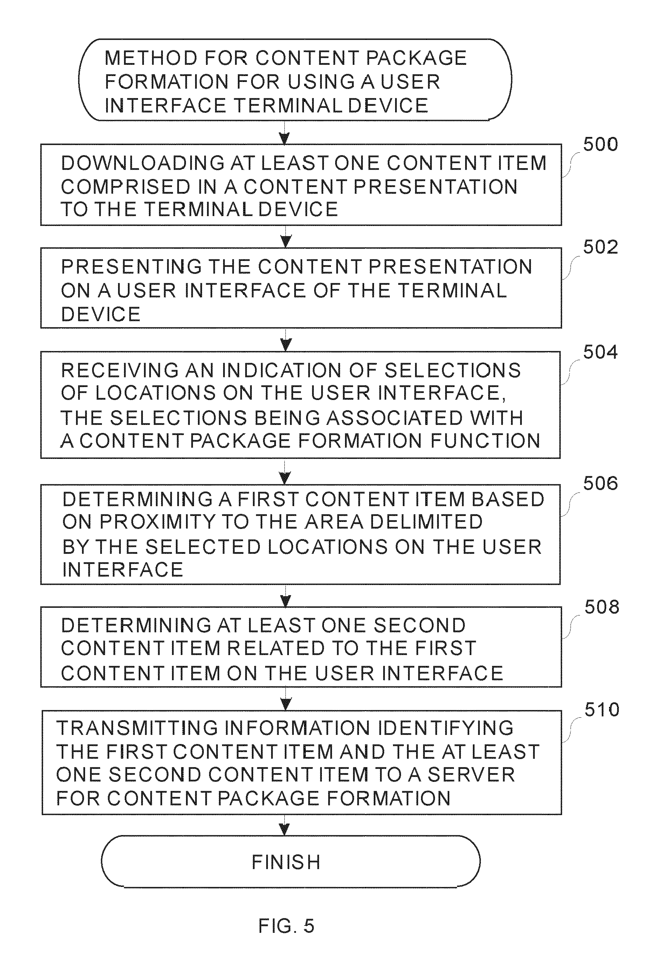

Figure 5 is a flow chart illustrating a method for content package formation using a terminal device with a user interface in one embodiment of the invention.

At step 500 a content presentation comprising at least one content item is downloaded to a terminal device. The content presentation may be downloaded from a server network node. The terminal device may be a wireless terminal device, for example, a wireless mobile node. The terminal device may communicate over a wireless cellular radio interface to a base station.

In one embodiment of the invention, a content item may comprise at least one of a structured document, a hypertext document, an image, a video and an animation.

In one embodiment of the invention, the content presentation comprises at least one of structured document, a hypertext document, an image, a video and an animation.

In one embodiment of the invention, the at least one content item may comprise at least one controlling content item that determines at least one of the structure of the presentation and the timing of the presentation. There may be additional content items among the at least one content item that comprise visual or textual information.

In one embodiment of the invention, the terminal device is a network node or a wireless mobile node as illustrated in association with Figures 1 and 2.

At step 502 at least part of the content presentation is presented on a user interface of the terminal device.

In one embodiment of the invention, the presentation may involve a parsing and processing of at least one controlling content item that determines at least one of the structure of the presentation and the timing of the presentation and the presenting of at least one content item at a place on the user interface determined by the controlling content item.

The content presentation may be presented in a browser function. The browser function may be part of the user interface.

At step 504 the terminal device receives an indication of a selection of at least one location on the user interface, the selection being associated, that is, performed with a content package formation function. The content package formation function may also be called a publishing tool. The content package formation function may determine at least part of content items to be comprised in a content package formed at a request from the terminal device. The publishing tool may be part of the user interface or a browser. The publishing tool may be activated from the user interface or a browser. The terminal device may receive an indication of only a single location on the user interface.

In one embodiment, the user of the terminal device first activates the publishing tool, for example, using the user interface. The user may move a pointer symbol of the publishing tool on the user interface using a pointer device of the user interface. Thereupon, the user points at least one location on the content presentation on the user interface using the pointer symbol of the publishing tool.

At step 506 the terminal device or the publishing tool determines a first content item based on proximity of the first content item of the first content item on the user interface to an area delimited by the at least one location, the proximity being within a predefined threshold.

In one embodiment of the invention, the predefined threshold may be specified by the user, for example, by the user interface or the publishing tool. If the at least one location comprises more than two locations, the predefined threshold may be set to zero. In one embodiment of the invention, by delimiting by a single location is meant a single point or a small spot. In one embodiment of the invention, by delimiting by two locations is meant a line between the locations. By delimiting by three locations is meant the area within a triangle formed by the locations. By delimiting by four locations is meant the area within the rectangle.

In one embodiment of the invention, by delimiting with more than two locations is meant the area inside the geometric figure formed by connecting the locations with lines.

At step 508 the terminal device or the publishing tool determines at least one second content item related to the first content item on the user interface.

In one embodiment, the determination may use, for example, proximity of the at least one second content item to the first content item on the user interface, for example, so that the proximity must be within a predefined threshold.

In one embodiment, the determination may also use information comprised in a controlling content item, for example, a hypertext document or any structured document.

In one embodiment, the determination may determine that links to the first content item and the at least one second content item are comprised in a single structural entity, element or component within the controlling content item.

In one embodiment, the determination may determine that the first content item and the at least one second content item are comprised or links to them are comprised in a single structural entity, element or component within the controlling content item.

At step 510 the terminal device transmits information identifying the first content item and the at least one second content item to a server for content package formation.

In one embodiment, the terminal device may also transmit to the server a part of a controlling content item which comprises a link to at least one of the first content item and the at least one second content item.

In one embodiment, the part of the controlling content item may be a structural entity, element or component within the controlling content item

In one embodiment of the invention, the terminal device may also transmit to the server a representative image or any representative content item for the content package to be presented on a user interface of a terminal device where the content package is downloaded. The representative image or content item may be used to select the content package for presentation on the user interface of the terminal that downloaded the content package.

In one embodiment of the invention, links to first content item and the at least one second content item are comprised in the part of the controlling content item.

The embodiments of the invention described hereinbefore in association with the summary of the invention, Figures 1, 2, 3, 4 and 5 may be used in any combination with each other. Several of the embodiments may be combined together to form a further embodiment of the invention.

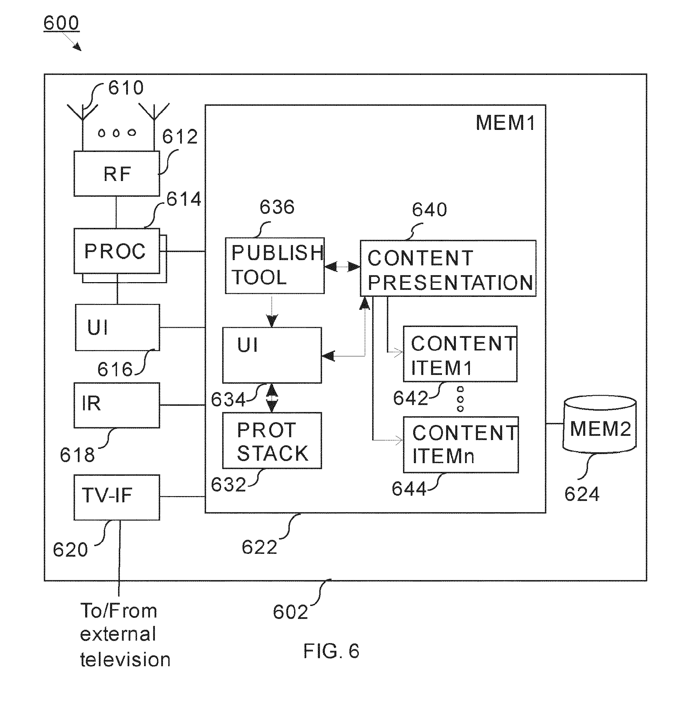

Figure 6 is a block diagram illustrating an apparatus in one embodiment of the invention. In Figure 6 there is an apparatus 600, which is, for example, a mobile node, user equipment, a handset, a cellular phone, a mobile terminal, an Application Specific Integrated Circuit (ASIC), a chip or a chipset. Apparatus 600 may correspond to a wireless mobile node illustrated in Figures 1 and 2, a UE illustrated in Figure 3 and a terminal device described in association with Figure 5. The internal functions of apparatus 600 are illustrated with a box 602. Apparatus 600 may comprise at least one antenna 610. There may be multiple input and output antennas. In association with apparatus 600 there is at least one Radio Frequency (RF) circuit 612. RF circuit 612 may be also any circuit or may be referred to as circuit 612 or circuitry 612. RF circuit 612 may also comprise a baseband circuit (not shown). RF circuit 612 is communicatively connected to at least one processor 614. Connected to processor 614 there may be a first memory 622, which is, for example, a Random Access Memory (RAM). There may also be a second memory 622, which may be a non-volatile memory, for example, an optical or magnetic disk or a flash memory. There may also be a local User Interface (UI) 616 and an interface to an external display 620. There is also an infrared receiver 618 for receiving commands from a remote controller. In memory 620 there may be stored software relating to functional entities 632 - 636. A protocol stack entity 632 communicates with RF circuit 612 to signaling and user data transmission and reception. Protocol stack entity 632 may comprise, for example, an internet protocol stack.

A user interface entity 634 performs content presentation rendering on a user interface presented via interface 620 to external display. User interface entity 634 receives content items via protocol stack 632 or obtains content presentations from memory 622 such as a content presentation 640, from which there are local links to content items 642 and 644. User interface entity 634 may parse controlling content items such as hypertext documents. It may also issue requests to protocol entity 632 to retrieve content items for which there are links within a content item being rendered via interface 620 on the external display. User interface entity 634 communicates with a publishing tool 636, that is, a content package formation function or tool 636, explained in association with Figures 2, 3, 4 and 5.

RF circuit 612 may comprise a transmitter for SC-FDMA and a receiver or a transmitter for OFDMA. RF circuit 612 may also comprise a transmitter and a receiver circuit for WLAN transmission or reception. As used in this application, the term 'circuitry' and 'circuit' refers to all of the following: (a)hardware- only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor (s) or a portion of a microprocessor(s), that require software or firmware for operation, even if the software or firmware is not physically present. This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device

When the at least one processor 614 executes functional entities associated with the invention, memory 622 comprises entities such as, any of the functional entities 632, 634 and 636. The functional entities within apparatus 600 illustrated in Figure 6 may be implemented in a variety of ways. They may be implemented as processes executed under the native operating system of the network node. The entities may be implemented as separate processes or threads or so that a number of different entities are implemented by means of one process or thread. A process or a thread may be the instance of a program block comprising a number of routines, that is, for example, procedures and functions. The functional entities may be implemented as separate computer programs or as a single computer program comprising several routines or functions implementing the entities. The program blocks are stored on at least one computer readable medium such as, for example, a memory circuit, memory card, magnetic or optical disk. Some functional entities may be implemented as program modules linked to another functional entity. The functional entities in Figure 5 may also be stored in separate memories and executed by separate processors, which communicate, for example, via a message bus or an internal network within the network node. An example of such a message bus is the Peripheral Component Interconnect (PCI) bus.

The exemplary embodiments of the invention can be included within any suitable device, for example, including any suitable servers, workstations, PCs, laptop computers, PDAs, Internet appliances, handheld devices, cellular telephones, wireless devices, other devices, and the like, capable of performing the processes of the exemplary embodiments, and which can communicate via one or more interface mechanisms, including, for example, Internet access, telecommunications in any suitable form (for instance, voice, modem, and the like), wireless communications media, one or more wireless communications networks, cellular communications networks, 3G communications networks, 4G communications networks Public Switched Telephone Network (PSTNs), Packet Data Networks (PDNs), the Internet, intranets, a combination thereof, and the like.

It is to be understood that the exemplary embodiments are for exemplary purposes, as many variations of the specific hardware used to implement the exemplary embodiments are possible, as will be appreciated by those skilled in the hardware art(s). For example, the functionality of one or more of the components of the exemplary embodiments can be implemented via one or more hardware devices, or one or more software entities such as modules.

The exemplary embodiments can store information relating to various processes described herein. This information can be stored in one or more memories, such as a hard disk, optical disk, magneto-optical disk, RAM, and the like. One or more databases can store the information regarding cyclic prefixes used and the delay spreads measured. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be implemented by the preparation of one or more application-specific integrated circuits or by interconnecting an appropriate network of conventional component circuits, as will be appreciated by those skilled in the electrical art(s).

As stated above, the components of the exemplary embodiments can include computer readable medium or memories according to the teachings of the present inventions and for holding data structures, tables, records, and/or other data described herein. Computer readable medium can include any suitable medium that participates in providing instructions to a processor for execution. Such a medium can take many forms, including but not limited to, non-volatile media, volatile media, transmission media, and the like. Non-volatile media can include, for example, optical or magnetic disks, magneto-optical disks, and the like. Volatile media can include dynamic memories, and the like. Transmission media can include coaxial cables, copper wire, fiber optics, and the like. Transmission media also can take the form of acoustic, optical, electromagnetic waves, and the like, such as those generated during radio frequency (RF) communications, infrared (IR) data communications, and the like. Common forms of computer-readable media can include, for example, a floppy disk, a flexible disk, hard disk, magnetic tape, any other suitable magnetic medium, a CD-ROM, CDRW, DVD, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, a carrier wave or any other suitable medium from which a computer can read.

While the present inventions have been described in connection with a number of exemplary embodiments, and implementations, the present inventions are not so limited, but rather cover various modifications, and equivalent arrangements, which fall within the purview of prospective claims.

The embodiments of the invention described hereinbefore in association with the figures presented and the summary of the invention may be used in any combination with each other. Several of the embodiments may be combined together to form a further embodiment of the invention.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method, comprising:
downloading a content presentation comprising at least one content item to a network node;
presenting at least part of the content presentation on a user interface of the network node;
receiving an indication of a selection of at least one location on the user interface, the selection being performed with a content package formation function;
determining a first content item based on proximity of the first content item on the user interface to an area delimited by the at least one location, the proximity being within a predefined threshold;
determining at least one second content item related to the first content item on the user interface; and
transmitting information identifying the first content item and the at least one second content item to a server for content package formation.

2. The method according to claim 1, wherein the content presentation further comprises a structured document.

3. The method according to claim 1 or 2, wherein the structured document comprises syntax from at least one of a hypertext markup language, extensible hypertext markup language and extensible markup language.

4. The method according to claim 2 or 3, wherein the step of determining at least one second content item related to the first content item on the user interface comprises:
determining an element comprised in the structured document, the element comprising an identifier of the first content item and at least one identifier for the at least one second content item.

5. The method according to any of the claims 1 - 4, wherein at least one of the first content item and the second content item comprise a video component and a metadata component.

6. The method according to any of the claims 1 - 5, wherein the step of determining at least one second content item related to the first content item on the user interface comprises:
selecting a set of candidate content items based on a proximity on the user interface to the first content item, the proximity having a predefined threshold value; and
determining from the set of candidate content items such candidate content items that together are comprised in a rectangular area on the user interface.

7. The method according to any of the claims 1 - 6, wherein the step of determining at least one second content item related to the first content item on the user interface comprises:
comparing at least one element of an identifier of the first content item to at least element of an identifier for the at least one second content item; and
in response to at least one matching element in the comparison, determining the second content item as related to the first content item.

8. The method according to claim 7, wherein the at least one element comprises at least one of a domain name, a port number, an internet protocol address, a name component, a path name, a parameter and a query expression.

9. The method according to any of the claims 1 - 8, wherein the step of determining at least one second content item related to the first content item on the user interface comprises:
forming a first vector wherein the vector elements represent numbers of occurrences of predefined search terms in the first content item;
forming a second vector wherein the vector elements represent numbers of occurrences of predefined search terms in the second content item; and
in response to the first vector having a distance below a predefined threshold to the second vector, determining the second content item as related to the first content item.

10. The method according to any of the claims 1 - 9, wherein the first content item or the second content item comprises at least one of a text, a hypertext, a picture, a computer graphics animation and a video.

11. The method according to any of the claims 1 - 10, wherein information identifying the first content item and the at least one second content item comprises at least one of a uniform resource locator, a uniform resource identifier or an object identifier.

12. The method according to any of the claims 1 - 11, wherein the method further comprises:
receiving information identifying a first content item and information identifying at least one second content item to a server;
using the information identifying the first content item and the at least one second content item to download the first content item and the at least one second content item to the server;
selecting at least one content item from among the first content item or the at least one second content item at the apparatus to form a representative content item;
transforming the information identifying the first content item and the at least one second content item in the first content item and the at least one second content item to refer to the first content item and the at least one second content item within a content package data structure; and
forming a content package data structure using the first content item and the at least one second content item, the content package data structure identifying the representative image.

13. The method according to claim 12, wherein the method further comprises:
transmitting the content package data structure to a content package presentation network node or to a content package delivery server.

14. The method according to any of the claims 1 - 13, wherein the network node comprises a wireless mobile node and wherein the user interface is presented on an external display communicatively connected to the wireless mobile node.

15. A method, comprising:
downloading a content presentation comprising at least one content item to a network node;
presenting at least part of the content presentation on a user interface of the network node;
receiving an indication of a selection of at least two locations on the user interface, the selection being performed with a content package formation function;
determining a first content item and at least one second content item within an area delimited by the at least two locations;
and transmitting information identifying the first content item and the at least one second content item to a server for content package formation.

16. An apparatus comprising at least one processor and at least one memory including computer program code, the at least one memory and the computer program code configured to, with the at least one processor, cause the apparatus at least to perform:
downloading a content presentation comprising at least one content item to at least one memory among the at least one memory;
presenting at least part of the content presentation on a user interface of the apparatus;
receiving an indication of a selection of at least one location on the user interface, the selection being performed with a content package formation function;
determining a first content item based on proximity of the first content item on the user interface to an area delimited by the at least one location, the proximity being within a predefined threshold;
determining at least one second content item related to the first content item on the user interface by the apparatus; and
transmitting, from the apparatus, information identifying the first content item and the at least one second content item to a server for content package formation.

17. An apparatus, comprising:
means for downloading a content presentation comprising at least one content item to a network node;
means for presenting at least part of the content presentation on a user interface of the network node;
means for receiving an indication of a selection of at least one location on the user interface;
means for determining a first content item based on proximity of the first content item on the user interface to an area delimited by the at least one location, the proximity being within a predefined threshold;
means for determining at least one second content item related to the first content item on the user interface; and
means for transmitting information identifying the first content item and the at least one second content item to a server for content package formation.

18. An apparatus comprising at least one processor and at least one memory including computer program code, the at least one memory and the computer program code configured to, with the at least one processor, cause the apparatus at least to perform:
receiving information identifying a first content item and information identifying at least one second content item at the apparatus;
using the information identifying the first content item and the at least one second content item to download the first content item and the at least one second content item to at least one memory among the at least one the memory of the apparatus;
selecting at least one content item from among the first content item or the at least one second content item at the apparatus to form a representative content item;
transforming the information identifying the first content item and the at least one second content item in the first content item and the at least one second content item to refer to the first content item and the at least one second content item within a content package data structure at the apparatus; and
forming, at the apparatus, a content package data structure using the first content item and the at least one second content item, the content package data structure identifying the representative content item; and
transmitting the content package data structure to at least one of a delivery server and a wireless mobile node.

19. A system comprising the apparatus according to claim 16 and the apparatus according claim 18.

20. A computer program comprising code adapted to cause the following when executed on a data-processing system:
downloading a content presentation comprising at least one content item to a network node;
presenting at least part of the content presentation on a user interface of the network node;
receiving an indication of a selection of at least one location on the user interface, the selection being performed with a content package formation function;
determining a first content item based on proximity of the first content item on the user interface to an area defined by the at least one location, the proximity being within a predefined threshold;
determining at least one second content item related to the first content item on the user interface; and
transmitting information identifying the first content item and the at least one second content item to a server for content package formation.

21. A computer program comprising code adapted to cause the following when executed on a data-processing system:
receiving information identifying a first content item and information identifying at least one second content item at an apparatus;
using the information identifying the first content item and the at least one second content item to download the first content item and the at least one second content item to at least one memory of the apparatus;
selecting at least one content item from among the first content item or the at least one second content item at the apparatus to form a representative content item;
transforming the information identifying the first content item and the at least one second content item in the first content item and the at least one second content item to refer to the first content item and the at least one second content item within a content package data structure at the apparatus; and
forming, at the apparatus, a content package data structure using the first content item and the at least one second content item, the content package data structure identifying the representative content item; and
transmitting the content package data structure to at least one of a delivery server and a wireless mobile node.
